# EUROPEAN PATENT APPLICATION

(11) **EP 4 764 822 A1**
(43) Date of publication of application: **24.06.2026**
(21) Application number: 25223028.9
(22) Date of filing: 12.12.2025
(51) Int. Cl.: G06F 7/57, G06F 9/30, G06F 9/38, G06F 15/78

(54) **FLEXIBLY PROGRAMMABLE PROCESSING UNIT**

(30) Priority: 20.12.2024 FI 20246509
(71) Applicant: Nokia Solutions and Networks Oy, 02610 Espoo (FI)
(72) Inventor: JIVANESCU, Mihaela Andreea, Antwerp (BE); BORGHS, Eric, Geel (BE)
(74) Representative: Nokia EPO representatives

(57) **Abstract**

A digital data processing unit comprises: inputs for receiving input data; outputs for providing output data; one or more processing elements, and one or more switches. Each processing element have one or more inputs for receiving input data and one or more outputs for providing output data. Each processing element is configured to apply, during a time slot, a mathematical operation to its input data so as to generate output data. Each switch has outputs and at least one input for receiving a respective input value, wherein each switch is operated during a time slot based on control data to provide each received input value to one of its outputs selected based on the control data; wherein the one or more processing elements and the one or more switches are interconnected to form data paths between the inputs of the processing unit and the outputs of the processing unit, wherein at least one of the data paths is configured to provide, at a corresponding output of the processing unit, a final mathematical result from intermediate mathematical results generated by the one or more processing elements in the considered data path.

## Description

### TECHNICAL FIELD

Various example embodiments relate generally to a digital data processing unit, a processor and an associated compiler.

### BACKGROUND

A digital data processing unit is a hardware (e.g., software programmable circuitry) that receives input digital data, processes the input digital data according to instructions generated from a software program, and delivers output digital data. The more efficient this can be done, the lower the area cost of the processing unit but also the energy consumption during lifetime.

Various types of processing units may be used to process multiple data in parallel, including SIMD (Single Instruction, Multiple Data), SISD (Single Instruction, Single Data), MIMD (Multiple Instruction, Multiple Data) and MISD (Multiple Instruction, Single Data). Each of these types of processor unit includes processing elements to which instructions may be assigned according to a given set of rules.

The requirements in terms of algorithm (e.g., in terms of number of input data and the type of operations), parallelization and compute latency vary largely. Complex designs of processing units may be used to be able to map complex algorithms to a processing unit but this may require dimensioning the processing unit for the worst case - that might be also the least often used case - and thus a large amount of unused processing elements (i.e. dark silicon), high energy cost (wide data path means high power consumption) and more time to complete the processing.

### SUMMARY

According to some aspects, there is provided the subject matter of the independent claims. Some further aspects are defined in the dependent claims.

The embodiments, examples and features, if any, described in this specification that do not fall under the scope of protection are to be interpreted as examples useful for understanding the various embodiments or examples that fall under the scope of protection.

According to a first aspect, a digital data processing unit comprises: inputs for receiving input data; outputs for providing output data; one or more processing elements, and one or more switches. At least one or each processing element has one or more inputs for receiving input data and one or more outputs for providing output data. At least one or each processing element is configured to apply, during a time slot, a mathematical operation to its input data so as to generate output data. At least one or each switch has outputs and at least one input for receiving a respective input value. At least one or each switch is operated during a time slot based on control data to provide each received input value to one of its outputs selected based on the control data. The one or more processing elements and the one or more switches are interconnected to form data paths between the inputs of the processing unit and the outputs of the processing unit. At least one or each of the data paths is configured to provide, at a corresponding output of the processing unit, a final mathematical result from intermediate mathematical results generated by the one or more processing elements in the considered data path.

One or more switches may be operated during a time slot based on control data to provide a neutral value to at least one of its outputs selected based on the control data. A neutral value provided by a switch in a data path may be a neutral value for the final mathematical result produced by this data path.

A neutral value provided by an output of a switch to an input of a processing element applying a mathematical operation may be equal to the neutral element for the mathematical operation.

An input of a switch may be connected either to an input of the processing unit or to an output of a processing element. An output of a switch may be connected either to an output of the processing unit or to an input of a processing element.

A data path may comprise at least two processing elements.

A data path may comprise a first switch having an input connected to an input of the processing unit, a first processing element having an input connected to an output of the first switch, a second switch having an input connected to an output of the first processing element, a second processing element having an input connected to an output of the second switch.

The digital data processing unit may comprise a bitwise OR gate belonging to a first data path and a second data path. The output of the bitwise OR gate may be connected an output of the processing unit. A first input of the bitwise OR gate may be connected to a switch or processing element providing the mathematical result of the first data path. A second input of the bitwise OR gate may be connected to a switch or processing element providing the mathematical result of the second data path.

The inputs of the processing unit may comprise N first inputs for receiving data, with N>= 4. The one or more switches may comprise N first switches and N/2 second switches. The one or more processing elements may comprise N/2 first processing elements and N/4 second processing elements. Each of the N first switches may have (i) an input connected to a corresponding input among the N first inputs, (ii) a first output providing the input value received by its input and (ii) a second output providing a neutral value. Each of the N/2 first processing elements may have (i) an input connected to an output of a first corresponding switch among the N first switches and (ii) another input connected to an output of a second corresponding switch among the N first switches. Each of the N/2 second switches may have (i) an input connected to an output of a corresponding processing element among the N/2 first processing elements, (ii) a first output providing the input value received by its input and (ii) a second output providing a neutral value. Each of the N/4 second processing elements may have (i) an input connected to an output of a third corresponding switch among the N/2 second switches and (ii) another input connected to an output of a fourth corresponding switch among the N/2 second switches.

According to a second aspect, a processor comprises one or more digital data processing units according to the first aspect.

According to a second aspect, a compiler is configured to compile a program code to generate instructions to be processed by a processor according to the second aspect. The compiler may be configured to generate instructions for generating control data for one or more switches in the one or more digital data processing units.

The compiler may be configured to generate instructions for configuring the neutral values to be provided respectively by at least one of the switches in the one or more digital data processing units.

### BRIEF DESCRIPTION OF THE DRAWINGS

Some example embodiments will now be described with reference to the accompanying drawings.
FIGS. 1A and 1B illustrate aspects of the behaviour of a switch used in a processing unit according to an example.
FIG. 2 shows a processing unit according to an example.
FIG. 3 shows a processing unit according to an example.
FIGS. 4A-4D shows various configurations of a processing circuitry according to an example.
FIG. 5 shows a framework for controlling a processing unit according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. The example embodiments are given by way of illustration only and thus are not limiting of this disclosure. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

An architecture of a digital data processing unit is disclosed.

This architecture is referred to herein as the SIMDIM architecture, for "Single Instruction Multiple DIMmensions". The SIMDIM architecture provides dynamically adaptable data paths on which multidimensional vector operations can be mapped with a single instruction during a time slot. A SIMDIM architecture provides specialization and more flexibility. The SIMDIM architecture may be used in various types of processors.

The digital data processing unit according to the SIMDIM architecture (also referred to herein simply as the processing unit) includes one or more processing elements and one or more programmable switches.

The SIMDIM architecture is based on the use of one or more switches to interconnect one or more processing elements, thereby providing flexibility to define various data paths in a given digital data processing unit at run time as a function of control data provided to the switches. This is performed with fixed hardware interconnections between the switches and processing elements and dynamically adjustable control data values for the switches.

A processing element (PE) is configured to operate, during a time slot, in accordance with an operation code (or opcode) provided to the considered PE so as to apply a mathematical operation to an input data (e.g., from an input data stream) and generate an output data (e.g., for an output data stream).

A time slot may correspond for example to a clock cycle of a clock of the processor in which the processing unit is used.

The addresses of input data and output data may be defined in registers, e.g., in a register file.

The mathematical operation performed by a PE may be any type of basic operation like, for example, a multiplication, an addition, a division, a trigonometric operation, a shift, a logical operation (e.g., a XOR, AND, OR, NOR, etc), or a combination thereof.

A PE may be configured (and optimized) to apply only one or some of the above types of mathematical operations. A PE may be configured to operate on one or more specific data types: integer values of various lengths, floating point values of various lengths, binary values, etc. A PE may be configured (e.g., optimized) to operate only on a specific data type.

In computing, an opcode (abbreviated from operation code, also known as instruction machine code or instruction code) is the portion of a machine language instruction that specifies the operation to be performed.

A switch has outputs (e.g., at least two outputs) and at least one input for receiving a respective input value. A switch is operated during a time slot based on control data to provide each received input value to one of its outputs, where the output is selected based on the control data of the switch.

The control data of a switch may be carried by a control signal provided to an input of the switch or be stored in a register. To simplify the description of the figures and facilitate the understanding, the control data of a switch are described as being provided by a control signal. But in all the embodiments, register(s) may be used in replacement of control signal(s) to provide the control data.

The processing element(s) and the switch(es) are interconnected to form data paths between the inputs of the processing unit and the outputs of the processing unit. Each data path may have one or more inputs and has one output. A data path includes one or more switches and one or more PEs and the connections between these elements. The connections between the elements (i.e., switch and PEs) of a data path allow to connect the one or more inputs of the data path to the output of the data path.

A data path provides a final mathematical result at one corresponding output of the processing unit. The final mathematical result is based on intermediate mathematical results generated by the one or more processing elements in the considered data path.

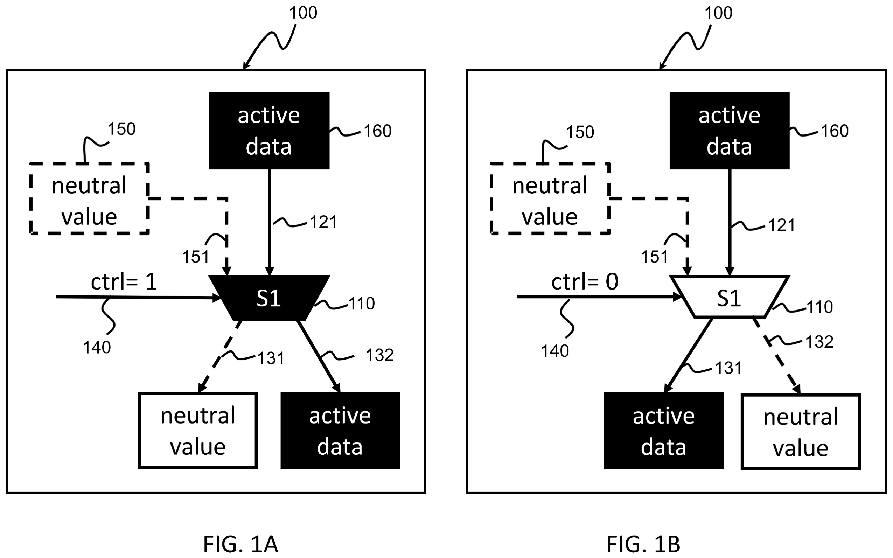

FIGS. 1A and 1B illustrate principles of the behaviour of a switch used in a processing unit 100 according to an example.

FIGS. 1A-1B show a simplified example of a switch 110 having one input 121 and two outputs 131, 132.

The switch 110 is operated based on a control signal 140 at each time slot. The control signal 140 provides control data to the switch and determines its behaviour.

In this simplified example with only one input 121 and two outputs 131, 132, the control signal 140 may provide a binary control data value to select which of the two outputs 131, 132 provides the input data received at the input 121. The control data value is used to select, for each input, an output to which the input data received at the considered input is provided.

This simplified example can be generalized to any number of inputs and outputs. There may be more inputs and more outputs. For example, a switch with NI= 2 inputs and NO= 3 outputs may be used with a control signal adapted for providing control data identifying an input for each of its outputs..

In the configuration of FIG. 1A, the control signal 140 of the switch 110 may carry the binary value '1' such that the input value received by input 121 is provided to the output 132. In contrast, in the configuration of FIG. 1B, the control signal 140 of the switch 110 may carry the binary value '0' such that the input value received by input 121 is provided to the other output 131.

In some example embodiments, the switch 110 may be operated to provide a neutral data having a neutral value 150 to at least one of its outputs, to which none of the input data is provided. The output(s) to which a neutral value is provided is (are) selected based on the control data provided to the switch (e.g., by a control signal or a register).

The neutral value 150 to be provided at the output of a switch may be fixed or may change dynamically. The neutral values may be fixed and preconfigured in the hardware of the switches or be dynamically configured at run time (e.g., using a configuration data value provided to the switch(es)). The neutral value may for example be received by the switch at a specific input 151 of the switch (e.g., at an input 151 that is reserved for the configuration of the neutral value).

A neutral data having a neutral value 150 provided by a switch 110 in a data path has a neutral value for the final mathematical result produced by this data path. Passing neutral values through one or more portions of data paths allows to "deactivate" these portions of data paths.

A neutral value provided by an output of a switch to an input of a PE applying a mathematical operation is equal to the neutral element for the mathematical operation: Therefore, the neutral value has no effect on the mathematical result produced by the PE applying the mathematical operation. For example:
- the neutral element of the addition is the value '0';
- the neutral element of the multiplication is the value '1';
- the neutral element of the logical function "OR" is the value '0';
- etc.

To distinguish the neutral data from the other data used in the processing unit, the other data will be referred to herein as the "active data".

Likewise, an input of a switch receiving a neutral value is designated by "inactive input", while the other input(s) is (are) referred to as "active input(s)". Further, each output of a switch providing a neutral value is referred to as "inactive output", while the other output(s) is (are) referred to as "active output(s)".

Likewise, an "active PE" may be defined as a PE receiving at least one active data. Thus an "inactive PE" may be defined as a PE receiving only neutral value(s) as input(s).

An "active data path" may be defined as a data path in which each processing element receives at least one active data. Thus, an active data path provides a valuable result at an output of the processing unit while the result of an inactive data path is unused and may be discarded. An "inactive data path" may be defined as a data path in which each processing element receives only neutral value(s) as input(s), or their combination produces a neutral value for the final mathematical result of this computation or for a subsequent processing element.

The fact that a piece of data is an active data does not prevent that the value of the active data received or provided by a switch may, in some cases, - e.g., depending on the use case and the values of the input data of the processing unit - be equal to the neutral value configured for this switch.

In all the figures representing a structure of a processing unit, the active data (e.g., the inputs of the processing unit) are represented by a black filled-in box while the inactive data are represented by a white filled-in box. Likewise, the active PEs are represented by a black filled-in shape (e.g., a circle representing an adder, an OR gate, etc) while the inactive PE are represented by a white filled-in shape (e.g., a circle representing an adder, an OR gate, etc). Further, the output of an active data path is represented by a black filled-in box while the output of an inactive data path is represented by a white filled-in box. A connection between a switch and a PE through which a neutral value is transmitted will be represented by a dotted line while the other connections are represented by a plain line.

Back to FIG. 1A, the active data 160 received at the input 121 of the switch 110 is provided at the output 132 of the switch 110 such that the input 121 is an active input of the switch 110 and the output 132 of the switch 110 is an active output of the switch 110. But the neutral value being provided to the output 131, this output 131 is an inactive output of the switch 110. In FIG. 1B, another configuration of the switch is used: the active data 160 received at the input 121 of the switch 110 is provided at the output 131 of the switch 110 such that the input 121 is an active input of the switch 110 and the output 131 of the switch 110 is an active output of the switch 110. But the neutral value being provided to the output 132, this output 132 is an inactive output of the switch 110 for this configuration.

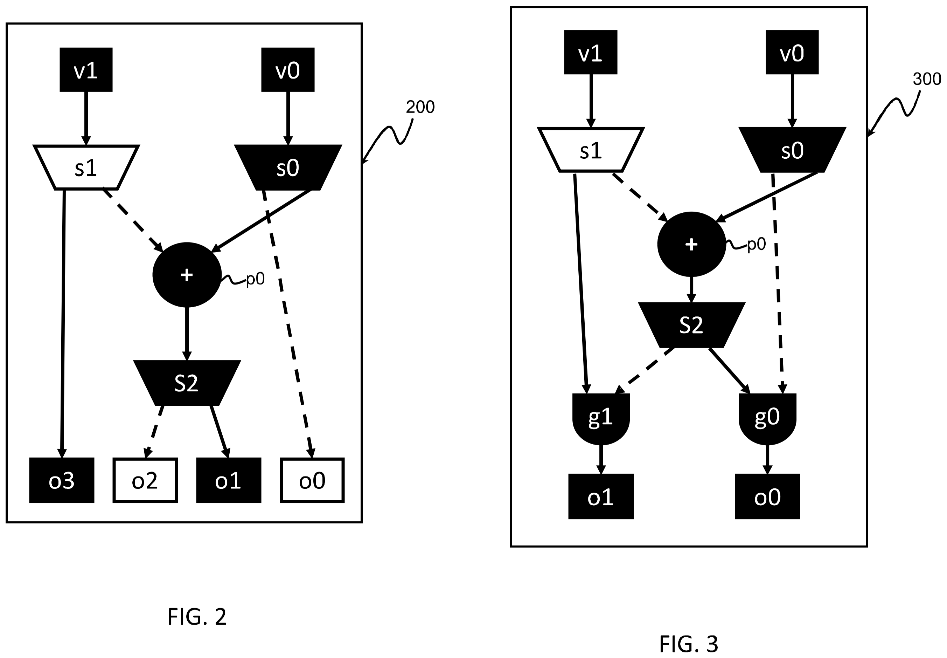

In the subsequent figures 2-3, 4A-4D:
- the switches are labelled with si, i being an order number;
- the PE are labelled with pi, i being an order number;
- the inputs of the processing unit are labelled with vi, i being an order number;
- the outputs of the processing unit are labelled with oi, i being an order number.

As a convention, used in figures 1A-1B and also in the subsequent figures 2-3,4A-4D, a switch providing its active input to the 'right' output 132 (e.g., operated by a control data value '1') is represented by a black filled-in shape, while a switch providing its active input to the 'left' output 131 (e.g., operated by a control data value '0') is represented by a white filled-in shape.

Also, the inactive input 151 of a switch, if any, is considered as implied and will no longer be shown for simplification reasons. Hence, the switches have one visible active input, one active output and one inactive output.

FIG. 2 shows a processing unit 200 according to an example.

This is an example of a processing unit with 2 inputs v0 to v1, a two-input adder p1, 3 switches s0 to s2 and 4 outputs o0 to o3. This example shows how the switches can be used when computing the addition of two inputs, v1 with v0.

In this specific example, switch s0 (in black) is operated based on a control data value (e.g., '1') such that its active input from v0 is provided to the right output (i.e., output 132 in the example of FIGS. 1A-1B) connected to the adder p0 and the neutral value '0' is provided to the left output (i.e., output 131 in the example of FIGS. 1A-1B) connected to output o0 of the processing unit. Thus, the right output is the active output of switch s0 and the left output is the inactive output of switch s0.

Switch s1 (in white) is operated based on a control data value (e.g., '0' ) such that its active input from v1 is provided to the left output (i.e., output 131 in the example of FIGS. 1A-1B) connected to the output o3 of the processing unit and the neutral value '0' is provided to the right output (i.e., output 132 in the example of FIGS. 1A-1B) connected to the adder p0. Thus, the left output is the active output of switch s1 and the right output is the inactive output of switch s1.

In this configuration the adder p0 performs the addition of v0 and 0, resulting in an output value equal to v0. This part also shows the importance of using zeros as neutral values to enable correct results when active and inactive data paths meet into a PE like the adder p0.

The output of the adder p0 is provided to the input of the switch s2. Switch s2 is operated based on a control data value (e.g., '1') such that its data input is provided to output o1 and a neutral value '0' is provided to output o2.

Summarizing this example, input data from v0 is provided to output o1 through the adder p0, input data from v1 is provided through the switch s1 to output o3, while outputs o0 and o2 receive zeros from the switches s0 and s2 respectively.

Different configurations of the switches will lead to different combinations of the inputs at the outputs. In the example of FIG. 2, each output o0 to o3 has a single possible input, so no contention happens for the four outputs.

FIG. 3 shows a processing unit 300 according to an example.

The example of FIG. 3 is variant of FIG. 2 in which the number of outputs is decreased from 4 to 2, as shown in FIG. 3 thanks to two bitwise 'OR' gates g0 and g1. The gates g0 and g1 are drawn in black, since at least one of their inputs have active data when switches are suitably configured.

Instead of using a multiplexer for selecting the active output among the two outputs o0 and o1 in FIG. 2, an OR' gate g0 is used in FIG. 3 to combine the active output provided by switch s2 with the neutral value from switch s0. Thus, only one input o0 is necessary to get the active output. The same applies for the two outputs o2 and o3 and gate g1.

When we ensure that, among the different data paths entering an output of a processing unit, maximum one data path is feeding active data and the other data paths are feeding only inactive data (e.g., zeros), the multiplexer can be replaced by a simple bitwise OR-gate. This replacement of multiplexers by bitwise 'OR' gates further simplifies the SIMDIM architecture.

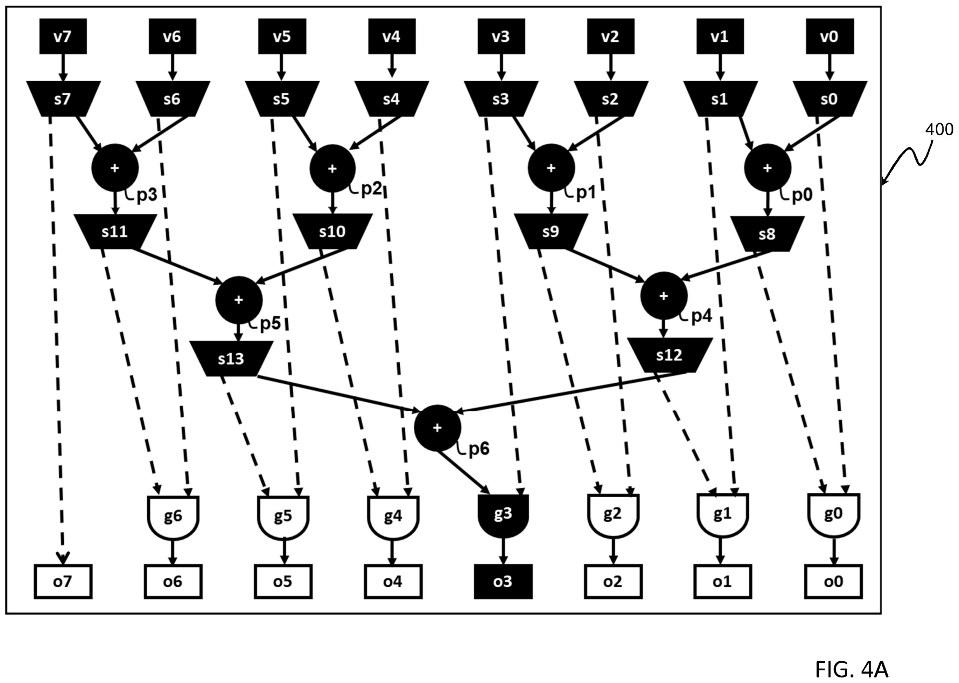

FIGS. 4A-4D shows various configurations of a processing circuitry according to an example.

All the concepts described by reference to FIGS. 1 to 3 are applied in FIGS. 4A-4D to create a larger example of processing unit according to the SIMDIM architecture.

FIGS. 4A-4D shows distinct configurations of an N-inputs SIMDIM adder tree. Switches and connections (paths) are used in these examples to promote maximum flexibility at run time. As will be explained below, with a single instruction, this SIMDIM adder tree can support a large number of different computation algorithms, computing the results on different dimensions.

The SIMDIM adder tree 400 has N=8 inputs and N=8 outputs. The SIMDIM adder tree 400 includes 9 interconnected levels, including:
- At a first level (the root level of the tree): 8 inputs v0 to v7 receiving respective input data;
- At a second level: 8 switches s0 to s7, where each of these switches receives as input the input data from one corresponding input among the inputs v0 to v7 of the processing unit;
- At a third level: 4 adders p0 to p3, where each of these adders receives as inputs the output data from the right output of two corresponding switches among the switches of the second level (e.g., adder p2 receives the output data from the right output of switches s4 and s5);
- At a fourth level: 4 switches s8 to s11, where each of these switches receives as input the output data from a corresponding adder among the adders p0 to p3 of the third level (e.g., switch s9 receives the output data from the adder p1);
- At a fifth level: 2 adders p4 to p5, where each of these adders receives as inputs the output data from the right output of two corresponding switches among the switches of the fourth level (e.g., adder p4 receives the output data from the right output of switches s8 and s9);
- At a sixth level: 2 switches s12 to s13, where each of these switches receives as input the output data from a corresponding adder among the adders p4 to p5 of the fifth level (e.g., switch s12 receives the output data from the adder p4);
- At a seventh level: 1 adder p6 receives as inputs the output data from the right output of the two 2 switches s12 to s13 of the sixth level;
- At an eighth level: 7 bitwise 'OR' gates g0 to g6, where each of gates g0 to g2 and g4 to g6 receives as inputs the output data from the left output of two corresponding switches from different levels (e.g., gate g0 receives the output data from the left output of switches s0 and s8); where gate g3 receives as inputs the output data from the left output of switch s3 and the output of adder p6;
- At a ninth level (the leaf level of the tree): 8 output o0 to o7 receiving respective output data from one of the gates g0 to g7 or from switch s7.

The SIMDIM adder tree 400 provides a data path for each output. The data paths include:
- A 1-input data path DP7 leading to output o7, this data path including v7, s7 and providing a mathematical result at output o7;
- A 2-inputs data path DP6 leading to output o6, this data path including v7, v6, s7, s6, p3, s11, g6 and providing a mathematical result at output o6;
- A 4-inputs data path DP5 leading to output o5, this data path including v7 to v4, s7 to s4, p3, p2, s11, s10, p5, s13, g5 and providing a mathematical result at output o5;
- A 2-inputs data path DP4 leading to output o4, this data path including v5, v4, s5, s4, p2, s10, g4 and providing a mathematical result at output o4;
- A 8-inputs data path DP3 leading to output o3, this data path including v7 to v0, s7 to s0, p3 to p0, s11 to s8, p4 to p5, s12 to s13, p6, g3 and providing a mathematical result at output o3;
- A 2-inputs data path DP2 leading to output o2, this data path including v3, v2, s3, s2, p1, s9, g2 and providing a mathematical result at output o2;
- A 4-inputs data path DP1 leading to output o1, this data path including v3 to v0, s3 to s0, p1, p0, s9, s8, p4, s12, g1 and providing a mathematical result at output o1;
- A 2-inputs data path DP0 leading to output o0, this data path including v1, v0, s1, s0, p0, s8, g0 and providing a mathematical result at output o0.

With the connection between the elements of this SIMDIM adder tree, there is no need to place a switch after the last adder p6 and its output is directly wired to the input of gate g3.

By configuring the switches of these data paths, neutral values may be propagated along portions of these data paths such that these portions of the data paths become inactive while other portions become active. One or more active portions of a data path may form an active data path if these active portions connect at least one input of the processing unit to at least one output of the processing unit.

The use of neutral values may be propagated along one or more portions of data paths creating flexibility for activating (or respectively deactivating) portions of the data paths.

FIG. 4A shows a first configuration of the SIMDIM adder tree allowing to compute a sum of 8 inputs at one active output o3 by using the active data path DP3, e.g., o3=v7+v6+v5+v4+v3+v2+v1+v0 with one instruction and within a single time slot.

In this example, the 8-inputs data path including v7 to v0, s7 to s0, p3 to p0, s11 to s8, p4 to p5, s12 to s13, p6, g3 and providing a mathematical result at output o3 is used, in which all adders are active elements. All switches are configured with value '1', meaning that the active data received by a switch go towards the next adder, while the non-active one goes to an inactive output.

At gate g3, the output of adder p6 is bitwise OR-ed with the neutral value (zero) coming from switch s3 that, in this configuration, is an inactive path. Thus, the result at output o3 is the correct accumulation of all the 8 inputs v0 to v7.

Each of the other outputs o0 to o2 and o4 to o7 are inactive output and provides an output value equal to zero that may be discarded. The respective data paths DP0 to DP2 and DP4 to DP7 leading to these outputs are inactive data paths.

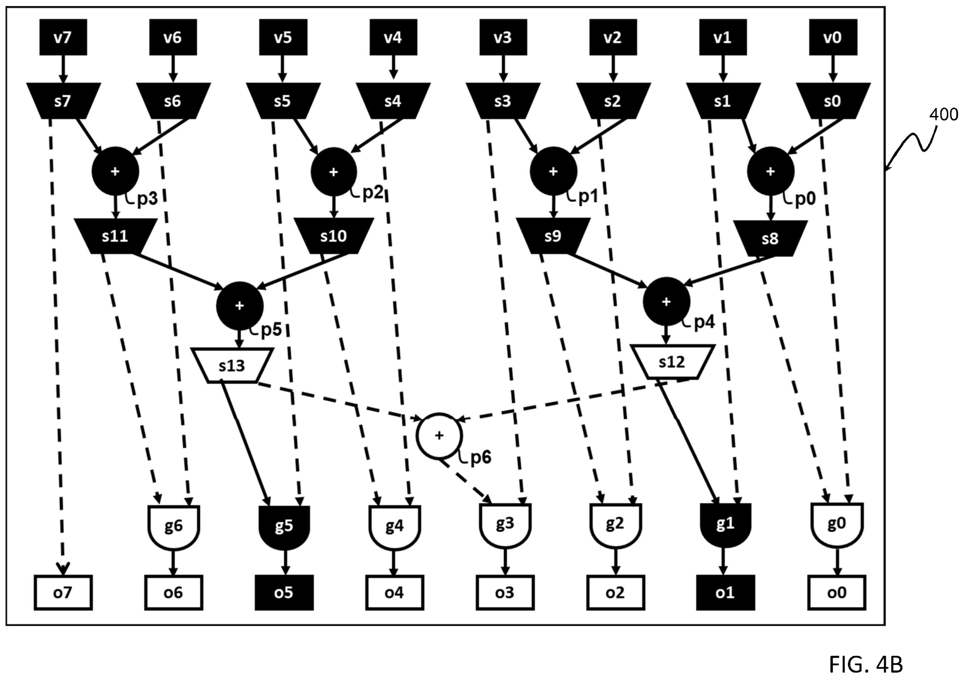

FIG. 4B shows a second configuration of the SIMDIM adder tree allowing to compute at the same time:
- a sum of 4 inputs at one active output o5 (o5=v7+v6+v5+v4) by using the active data path DP5;
- a sum of 4 other inputs at another active output o1 (o1= v3+v2+v1+v0) by using the active data path DP1.

These sums can be computed with one instruction and within a single time slot.

In the example of FIG. 4B, switches s0 to s11 are configured with a control data value '1', while switches s12 and s13 are configured with a control data value '0', everything else remaining as in FIG. 4A. This means that until the sixth level including the switches s12 and s13 we have a regular adder tree, as in the example of FIG. 4A**Error!**

### Reference source not found..

In FIG. 4B, the switch s12 is configured with a control data value '0', such that its active input data is provided to output o1 through gate g1 and such that the neutral value (zero) from s12 is provided by s12 goes to the adder p6.

Similarly, switch s13 is also configured with a control data value '0', such that its active input data is provided to output o5 through gate g5 and the neutral value (zero) from s13 is provided to the adder p6.

This means that both inputs of the adder p6 are neutral values (zeros): hence the result of this addition performed by the adder p6, in this configuration, is always zero. Thus, by configuring the switches s12 and s13 with a control data value '0', the last portion (from adder p6 to output o3) of the 8-inputs data path DP3 leading to output o3 is deactivated. Instead, all portions of the data paths DP1 and DP5 leading respectively to outputs o1 and o5 are active such that they become active data paths.

All the inputs of the OR gates g0 to g6 receive all neutral values (zero) except the inputs of OR gates g1 and g5 connected to the activated output (here the left output) of switches s12, s13 that provide active data to OR gates g1 and g5, respectively.

The bitwise OR-gates allow to have the correct results at the output of the SIMDIM adder tree.

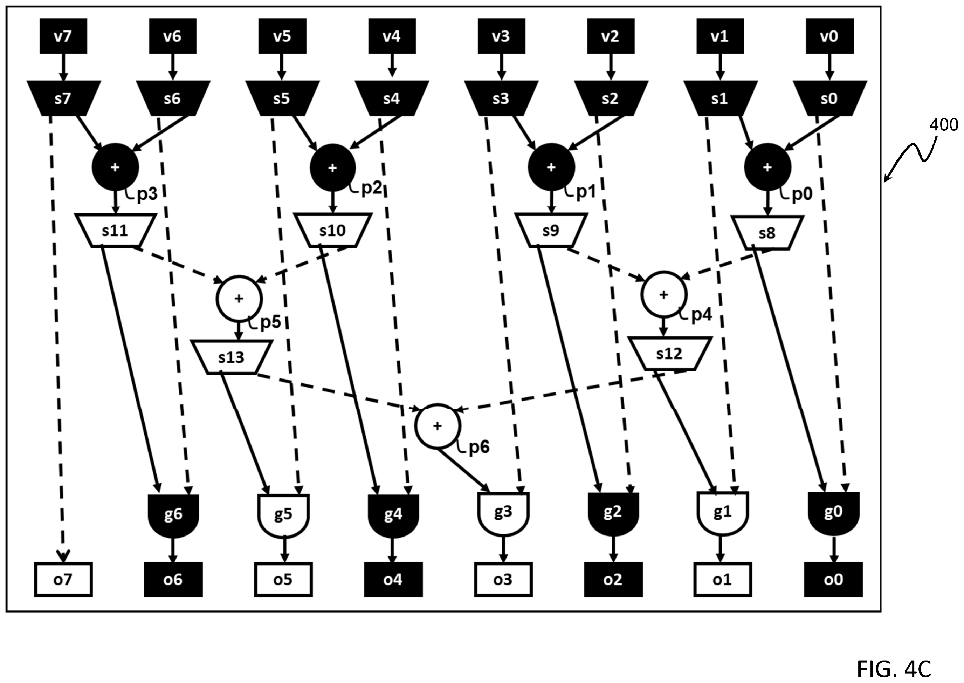

FIG. 4C shows a third configuration of the same SIMDIM adder tree allowing to compute at the same time:
- a sum of 2 inputs at one active output o6=v7+v6 by using the active data path DP6;
- a sum of 2 inputs at one active output o4=v5+v4 by using the active data path DP4;
- a sum of 2 inputs at one active output o2=v3+v2 by using the active data path DP2;
- a sum of 2 inputs at one active output o0=v1+v0 by using the active data path DP0;

These sums can be computed with one instruction and within a single time slot.

In this example, the switches s0 to s7 are configured with a control data value '1'. Switches s8 to s11 are configured with a control data value '0', pushing their input directly to the outputs o0, o2, o4, o6 and neutral values (zeros) to the adders p4 and p5 making them inactive PEs in this configuration. Thereby the portions of data paths DP1, DP3, DP5 to which the adders p4 and p5 belong to are inactive portions from adders p4 and p5 to the respective outputs.

In this example the configuration of the switches s12 and s13 is irrelevant, since the switches s12 and s13 receive neutral values (zeros) from adders p4 and p5 respectively, thereby these adders are inactive PEs. Also the switches s12 and s13 provide neutral values (zeros) to all their outputs and these neutral values (zeros) are provided to the adder p6, (which is also an inactive PE in this configuration) and the outputs o1 and o5 through the gates g1 and g5 respectively. The inactive adder p6 as well provides a neutral value (zero) (zero) to the output o3. Thus, the outputs o1, o3, o5, o7 are inactive outputs receiving only neutral values (zeros).

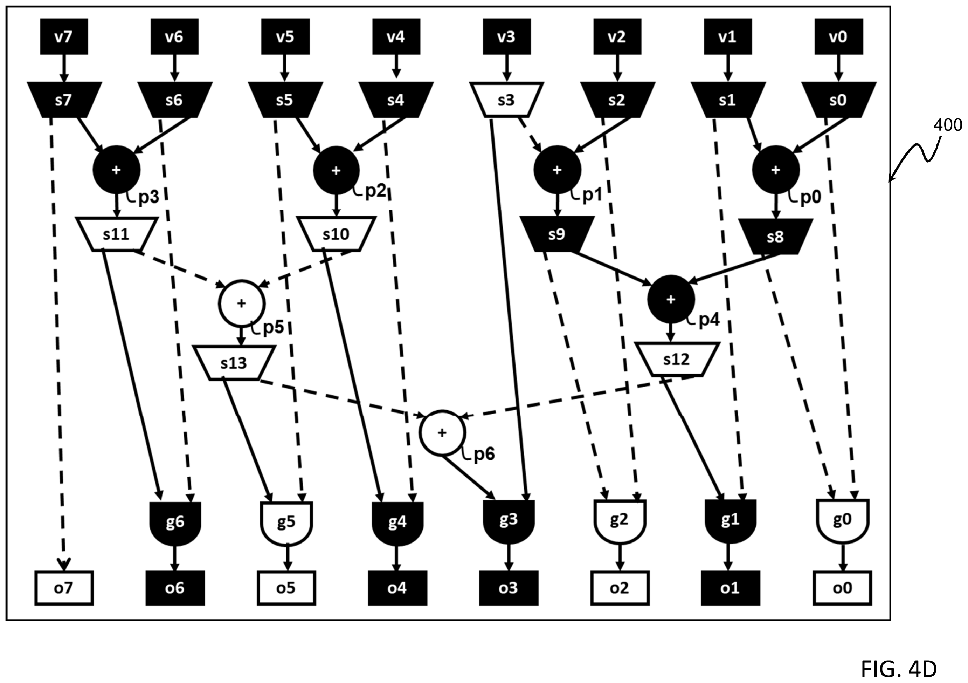

FIG. 4D shows a fourth (non-symmetric) configuration of the SIMDIM adder tree allowing to compute at the same time:
- a sum of 2 inputs at one active output o6=v7+v6 by using the active data path DP6;
- a sum of 2 inputs at one active output o4=v5+v4 by using the active data path DP4;
- a sum of 1 input at one active output o3=v3 by using the active data path DP3;
- a sum of 3 inputs at one active output o1=v2+v1+v0 by using the active data path DP1;

These sums can be computed with one instruction and within a single time slot.

For this use case, switches s0 to s2, s4 to s9 have been configured with a control data value '1'. Switches s3, s10 to s12 have been configured with a control data value '0'such that the adders p5 and p6 are inactive PEs as well as gates g0, g2 and g5. Like for FIG. 4C, switch s13 can be configured either with control data value '0' or control data value '1' without affecting the mathematical result.

The example of FIG. 4D shows the importance of passing neutral values (zeros) on the data paths to "deactivate" portions of data paths: comparing FIG. 4A and FIG. 4D, one can see that in FIG. 4D the data path DP3 is nearly completely deactivated except the portion of the data path DP3 connecting v3 to gate g3 via switch s3, while in FIG. 4A it is this portion of the data path DP3 connecting v3 to gate g3 via switch s3 that is deactivated.

In the example of FIG. 4D, the adder p6 is not followed by a switch, meaning that the result can freely go towards the output o3 through gate. Since the inputs of adder p6 from s12 and s13 are both zeros, the output of the adder p6 is also zero. So, it is safe to bitwise OR these zeros with the value v3 and providing the correct result (v3) to output o3.

The examples of FIGS. 4A to 4D can be generalized to any number of inputs, number of outputs, number of levels in the tree formed by interconnecting processing elements with switches and to any type of interconnection. The number of data elements that can be combined along a data path depend on the number of processing elements in a data path and how they are connected.

The examples of FIGS. 4A to 4D can be generalized to any type of processing element. For example, some or all of the adders of the processing unit of FIGS. 4A to 4D may be replaced by bitwise XOR gates applicable to bytes, word, or vectors of any length. The neutral values are configured in accordance with the type of mathematical operation performed by the processing elements to which the neutral values may be provided at the output of the switches.

For example, when it makes sense, other values than only zeros can be considered for the inactive path. As example, in the SIMDIM architecture discussed so far, a switch provides a zero as neutral value towards an adder, but alternatively, a '1' could be provided as neutral value towards a multiplier with the use AND-gates instead of OR-gates, such that inactive paths would provide all-ones to not affect the mathematical result at the output of the data paths.

In some embodiments, the control data of the switches may be grouped if the use case allows it. In practice each switch may be controlled independently, but in some designs, other patterns can be used. As an example, a single control data value can be used for groups of switches operated with a same control signal (or a same register). For example, there may be one control signal (or one register) per layer in the tree, meaning switches s0 to s7 can be controlled by a same control signal (or a same register), and same for switches s8 to s11 and switches s12 to s13, respectively. While this can limit the flexibility, it can simplify the hardware and/or the task of the programmer.

The examples of FIGS. 4A to 4D can be generalized to any type (bit, byte, word, vector, etc) and/or length of input data and output data. Each value of an input / output data may be coded on one or more bits, on one or more bytes as a vector, etc. The SIMDIM architecture supports element-wise operations (element i of input vector A with element i of input vector B) and bitwise operations (bit i of input data A with bit i of input data B). For example, a SIMDIM architecture with all processing elements being bitwise XOR can offer flexibility and very fast operation for aggregating some or all data elements from one or more vectors into a data element (e.g., a bit).

To use the SIMDIM architecture in a processor, only a single instruction field may be used. Timing wise, it is possible to reduce the computation time from several clock cycles to a single clock cycle and have a much-simplified program. Since bitwise operations are very fast, multiple levels of the SIMDIM architecture, if not all, can be combined in the same clock cycle, thus greatly speeding up the bit aggregation. The overhead of the SIMDIM architecture due to the use of switches (and optional XOR gates at the output) is not significant on the scale of the processor.

The SIMDIM architecture is also fitted for a hardwired implementation where it can enable much needed flexibility.

The SIMDIM architecture makes efficient use of wide and very wide data path resources (tens, hundreds, thousands of inputs) for all varieties and dimensions of vector accumulations, matrix multiplications, matrix inversion, convolutions, and FIR filter operations, bitwise operations, etc., with ultra short latency, while facilitating the mapping of the algorithms on the available hardware for a wider range of use cases.

Also input data can be aggregated into vectors of different dimensions (for example, 2 vectors may be mapped on inputs v0 to v7: a first vector is mapped on inputs v0-v1 and a second vector is mapped on inputs v2 to v7), and provided to symmetric or asymmetric processing unit according to the SIMDIM architecture. This can be configured at run-time of the processor by software and gives another level of flexibility. The SIMDIM architecture greatly improves the flexibility, software simplicity and efficiency of ever wider data paths.

Bitwise operations themselves are very fast, but in many processors, one needs to perform operations like the ones described in FIG. 3, to even bitwise XOR (or any other bitwise operation) all bits in a vector. It would take O(log2(M)) instructions, when the effective operations condensed, could take 1 or 2 clock cycles and a single instruction, as we explain later in this document.

This approach of adding switches to guide active data and neutral values through the data paths in a tree is also applicable to more complex trees (or more simple trees) and to any type or length of data paths.

These switches can be programmed through software, on a clock cycle basis if needed. These switches can be configured on where and how to provide their input data to the outputs, i.e., whether to the left output 131 or the right output 132 as in the examples discussed herein.

This flexibility enables one to feed the SIMDIM architecture inputs at run-time with very wide data vectors or multiple smaller vectors of variable dimensions. The configuration of the processing unit can change every clock cycle, allowing reusing the hardware resources of the processing unit according to the SIMDIM architecture in various ways over time.

The SIMDIM architecture, when applied to adder trees, enables for example accumulation of many values in different combinations with lowest latency in a flexible way. The use of the switches as presented here, also simplify a lot the mapping of an algorithm on hardware resources, whereas in the state of the art, that task may be significantly more complex, less flexible, requiring different types and number of instructions.

The proposed SIMDIM architecture allows to reduce the dark silicon problem (i.e. costly silicon that is not used) of wide and very wide data paths by flexibly and efficiently using the available resources and decreasing the energy used by different computations.

The SIMDIM architecture is usually faster (width and parallelism) so it can either go into sleep/power down mode, or be used for other computations while it is waiting for the next main use case data.

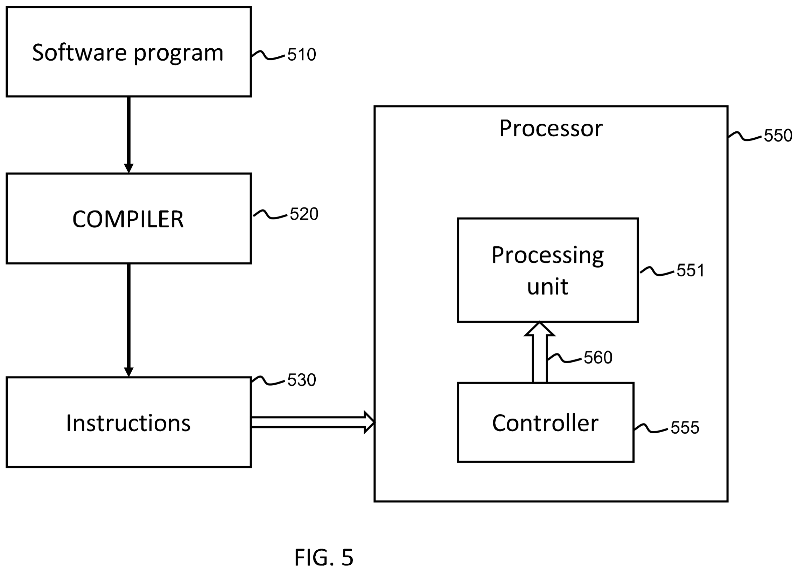

FIG. 5 shows a framework for controlling a processing unit according to an example.

A processor 550 may include one or more processing units 551 according to the SIMDIM architecture. For simplicity, only one processing unit is represented in FIG. 5. The connections between the switches and the processing elements are implemented by the hardware of the processing unit 551. The neutral values may be preconfigured in the hardware of the switches or be dynamically configured at run time.

A compiler 520 adapted for a processor 550 including one or more processing units 551 according to the SIMDIM architecture may be configured to compile a program code 510 to generate instructions 530 to be processed by the processor 550. The compiler 520 is configured to generate instructions 530 for generating control data 560 (e.g., to be converted into control signals for the switches or be stored in registers) for the one or more switches in the processing unit 551. The control data 560 may be generated by a controller 555 of the processor. As described herein, a control data for a switch is used to select, for each input, an output to which the input data received at the considered input is to be provided.

When the neutral values are not preconfigured in the hardware of the switches, the compiler 520 may be configured to compile the program code 510 to generate instructions 530 for configuring the neutral values to be provided respectively by one or more switches in the processing unit 551.

The instructions concerning the neutral values to be used may be converted into configuration data values (e.g., provided to the switches by configuration signals or by registers) provided to the processing unit 551, e.g., by the controller 555.

For a given switch, a same signal (or a same register) may be used for providing a configuration data value for controlling the neutral value to be used by the switch and for providing a control data value for selecting a respective output for each input of the switch.

The compiler may be configured to ensure that no processing element is allocated to two or more instructions in the same time slot by checking possible conflicts with other instructions to be allocated in the same time to the same processing element.

Each digital data processing unit disclosed herein may be implemented by a processing circuitry. Each digital data processing unit disclosed herein may be included in a DSP (Digital Signal Processor) or any other type of processors, including microprocessors. The term "processor" should not be construed to refer exclusively to hardware capable of executing program instructions and may implicitly include one or more processing circuits, whether programmable or not.

The term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

As a further example, the term circuitry also covers an implementation of merely a hardware circuit or processor (or multiple processors) or portion of a hardware circuit or processor and its (or their) accompanying software and/or firmware.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Although aspects have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

### LIST OF MAIN ABBREVIATIONS

- MIMD: Multiple Instruction Multiple Data
- MISD: Multiple Instruction Single Data
- PE: Processing Element
- SIMD: Single Instruction Multiple Data
- SISD: Single Instruction Single Data

## Claims

1. A digital data processing unit comprising
inputs for receiving input data;
outputs for providing output data;
one or more processing elements, each processing element having one or more inputs for receiving input data and one or more outputs for providing output data, each processing element being configured to apply, during a time slot, a mathematical operation to its input data so as to generate output data;
one or more switches, each switch having outputs and at least one input for receiving a respective input value, wherein each switch is operated during a time slot based on control data to provide a received input value to one of its outputs selected based on the control data;
wherein the one or more processing elements and the one or more switches are interconnected to form data paths between the inputs of the digital data processing unit and the outputs of the processing unit; and
wherein at least one of the data paths is configured to provide, at a corresponding output of the processing unit, a final mathematical result from intermediate mathematical results generated by the one or more processing elements in the considered data path.

2. The digital data processing unit of claim 1,
wherein at least one switch is operated during a time slot based on control data to provide a neutral value to at least one of its outputs selected based on the control data;
wherein a neutral value provided by a switch in a data path is a neutral value for the final mathematical result produced by this data path.

3. The digital data processing unit of claim 2,
wherein a neutral value provided by an output of a switch to an input of a processing element applying a mathematical operation is equal to the neutral element for the mathematical operation.

4. The digital data processing unit of any of the preceding claims,
wherein an input of a switch is connected either to an input of the digital data processing unit or to an output of a processing element.

5. The digital data processing unit of any of the preceding claims,
wherein an output of a switch is connected either to an output of the digital data processing unit or to an input of a processing element.

6. The digital data processing unit of any of the preceding claims,
wherein at least one of the data paths comprises at least two processing elements.

7. The digital data processing unit of any of the preceding claims,
wherein at least one of the data paths comprises a first switch having an input connected to an input of the processing unit, a first processing element having an input connected to an output of the first switch, a second switch having an input connected to an output of the first processing element, a second processing element having an input connected to an output of the second switch.

8. The digital data processing unit of any of the preceding claims, comprising
a bitwise OR gate belonging to a first data path and a second data path,
wherein the output of the bitwise OR gate is connected an output of the processing unit,
wherein a first input of the bitwise OR gate is connected to a switch or processing element providing the mathematical result of the first data path;
wherein a second input of the bitwise OR gate is connected to a switch or processing element providing the mathematical result of the second data path.

9. The digital data processing unit of any of the claims 2 to 8,
wherein the inputs of the digital data processing unit comprise N first inputs for receiving data, with N>= 4;
wherein the one or more switches comprise N first switches and N/2 second switches;
wherein the one or more processing elements comprise N/2 first processing elements and N/4 second processing elements;
wherein each of the N first switches has (i) an input connected to a corresponding input among the N first inputs, (ii) a first output providing the input value received by its input and (ii) a second output providing a neutral value;
wherein each of the N/2 first processing elements has (i) an input connected to an output of a first corresponding switch among the N first switches and (ii) another input connected to an output of a second corresponding switch among the N first switches;
wherein each of the N/2 second switches has (i) an input connected to an output of a corresponding processing element among the N/2 first processing elements, (ii) a first output providing the input value received by its input and (ii) a second output providing a neutral value;
wherein each of the N/4 second processing elements has (i) an input connected to an output of a third corresponding switch among the N/2 second switches and (ii) another input connected to an output of a fourth corresponding switch among the N/2 second switches.

10. A processor comprising one or more digital data processing units according to any of the preceding claims.

11. A compiler configured to compile a program code to generate instructions to be processed by a processor according to claim 10, wherein the compiler is configured to generate instructions for generating control data for one or more switches in the one or more digital data processing units.

12. The compiler of claim 11, wherein the processor comprises one or more digital data processing units according to claim 2, wherein the compiler is configured to generate instructions for configuring the neutral values to be provided respectively by at least one of the switches in the one or more digital data processing units.
